# EUROPÄISCHE PATENTSCHRIFT

(11) **EP 3 974 878 B1**
(45) Veröffentlichungstag und Bekanntmachung des Hinweises auf die Patenterteilung: **07.06.2023**
(21) Anmeldenummer: 21189225.2
(22) Anmeldetag: 02.08.2021
(51) Int. Cl.: G02B 3/14, F16F 1/32, G01J 1/04

(54) **LINSENMODUL**
LENS MODULE
MODULE DE LENTILLE

(30) Priorität: 29.09.2020 DE 102020125369
(43) Veröffentlichungstag der Anmeldung: 30.03.2022
(73) Patentinhaber: SICK AG, 79183 Waldkirch (DE)
(72) Erfinder: Pfrengle, Thomas, 79258 Hartheim (DE); Burger, Jakob, 77955 Ettenheim (DE)

(56) Entgegenhaltungen:
- CN-U- 207 965 290
- DE-A1- 4 445 773
- DE-A1-102011 054 072
- DE-U1-202018 107 124
- US-A1- 2002 140 117
- US-A1- 2006 044 455
- US-A1- 2008 291 549
- US-A1- 2009 052 049
- US-A1- 2019 265 433
- US-A1- 2021 373 274

## Beschreibung

Die Erfindung betrifft ein Objektiv mit einem Linsenmodul mit einer adaptiven Linse.

In nahezu jedem optischen Sensor ist eine Sende- beziehungsweise Empfangsoptik vorgesehen. Häufig wird diese Optik mit Hilfe einer Fokusverstellung auf einen bestimmten Abstand oder Abstandsbereich scharf eingestellt, indem elektromechanisch oder optomechanisch die Position der Linsen und damit die Schnittweite der Sende- oder Empfangsoptik verstellt wird, beispielsweise mit Schrittmotoren oder Tauchspulen. Solche Lösungen erfordern viel Bauraum und stellen zudem hohe Ansprüche an den mechanischen Aufbau zur präzisen Einstellbarkeit, damit eine vorgegebene Fokuslage auch tatsächlich angenommen wird.

Eine Alternative ist der Einsatz von Optiken, bei denen nicht die Schnittweite, sondern unmittelbar die Form und damit die Brennweite der Linse selbst mittels einer Spannungsansteuerung variiert wird. Insbesondere werden dafür Gel- oder Flüssiglinsen genutzt. Bei einer Gellinse wird eine silikonartige Flüssigkeit mittels piezoelektrischer oder induktiver Aktoren mechanisch deformiert. Flüssiglinsen nutzen beispielsweise den sogenannten Elektrobenetzungseffekt (electrowetting) aus, indem zwei nicht mischbare Flüssigkeiten vorzugsweise ähnlicher Dichte, aber mit unterschiedlichen Brechungsindices und elektrischen Eigenschaften in einer Kammer übereinander angeordnet werden. Bei Anlegen einer Steuerspannung ändern die beiden Flüssigkeiten ihre Oberflächenspannung in unterschiedlicher Weise, so dass die innere Grenzfläche der Flüssigkeiten spannungsabhängig ihre Krümmung verändert.

Eine adaptive Linse muss in geeigneter Weise in ein Objektiv und dann gemeinsam mit dem Objektiv in einen Sensor eingebaut werden. Um nicht das gesamte Design an die adaptive Linse anpassen zu müssen, sollte die Verwendung von Standardobjektiven möglich sein. Für die Integration der adaptiven Linse ist ein Andrücken mit definierter Kraft erforderlich.

Eine herkömmliche Lösung sieht dafür die Verwendung eines O-Rings aus Gummi oder einem anderen elastischen Material vor. Dessen Eigenschaften, wie Schnurstärke oder Shorehärte, über alle Toleranzen, Alterung des Materials und den vorgesehenen Temperaturbereich so genau festzulegen, dass die Andruckkraft im erforderlichen Bereich bleibt, ist über eine Serie größerer Stückzahlen hinweg nicht möglich. Das Ergebnis sind Kontaktprobleme bei zu geringer Kraft und mögliche Beschädigungen der adaptiven Linse bei zu starker Kraft. Um die Kraft besser zu kontrollieren unempfindlicher gegenüber Toleranzen zu werden, kann der O-Ring zusätzlich mit einem Gewindering verschraubt werden. Auch dabei bleibt es schwierig, die Kraft über den Temperaturbereich hinweg konstant zu halten. Außerdem benötigt die adaptive Linse eine Anschlussleitung, die seitlich herausgeführt ist, und beim Schrauben wird deren Position verändert. Durch definierte Gewindeanfänge oder eine längere Anschlussleitung mit Falttechniken ließe sich der Positionsversatz verhindern oder ausgleichen, aber das ist aufwendig und unbefriedigend.

Es ist weiterhin bekannt, die adaptive Linse in einem Modul zu verbauen und dabei den O-Ring mit einem Sicherungsring in Position zu halten. Das löst aber die geschilderten Probleme nicht, die Kraftverteilung ist nicht gleichmäßig und unterliegt weiterhin den genannten Toleranzen. Weiterhin bestehen Schwierigkeiten, die adaptive Linse nahe genug am Objektiv zu platzieren und auf dessen optische Achse auszurichten. Zum Zentrieren kann ein zusätzliches Kunststoffspritzteil verwendet werden, wobei aber dann das Objektiv so geformt sein muss, dass sich das Kunststoffspritzteil in der vorgesehenen Weise anbringen lässt. Zudem erhöht sich im Durchmesser die Baugröße.

Als Alternative zu einem O-Ring ist noch eine Feder aus einem Blechbiegeteil bekannt. Das bedarf einer Sonderfertigung der Feder mit aufwendiger Auslegung. Außerdem kann sich das Blechbiegeteil bei der Montage verbiegen und so eine Kraftänderung verursacht werden. Bekannt ist weiterhin, die adaptive Linse mit einem Stanzbiegeteil auf einer Leiterplatte zu montieren. Damit werden aber die beschriebenen Nachteile der aufwändigen individuellen Auslegung und Fertigung sowie möglicher Kraftänderungen nicht überwunden. Weiterhin kann die optische Achse durch Temperatureinwirkungen dezentriert werden.

Aus der US 2006/0044455 A1 ist eine Verstellvorrichtung für die Linse eines Kameramoduls bekannt, in der neben zahlreichen anderen Elementen auch eine Wellfeder verwendet wird. In der US 7 616 388 B2 kann eine Linse in einer Halterung durch Drehen eines Gewindes hin und her bewegt werden, wobei über dem Gewinde eine Wellfeder vorgesehen ist. Die JP4419417B2 zeigt eine weitere Fokusverstellung mit einer Spiralfeder, Tellerfeder oder Wellfeder. Die konstruktiven Herausforderungen sind hier aber nicht vergleichbar, weil jeweils zum Fokussieren die Linse als Ganzes bewegt werden muss. Eine adaptive Linse hingegen bleibt positionsfest und muss auch so gehalten werden, da hier das Fokussieren auf einer Brennweitenänderung beruht Die EP 0 098 540 A2 zeigt eine Wellfeder in einem axial verschieblichen Kondensor eines Mikroskops, wo der technische Unterschied zu einer Flüssiglinse noch größer wird.

Die US 2013/0229617 A1 befasst sich mit einer Brille mit variablem Fokus. In einer Aktoren zum Erzeugen einer linearen Bewegung ist eine Weitfeder angeordnet, deren Funktion aber nicht ist, eine adaptive Linse mit wohldefinierter Kraft in ihrer Position zu halten.

Aus der CN 207 965 290 U ist eine Linse für eine Kamera bekannt, wobei in axialer Richtung zwischen Linse und Linsenträger eine wellenförmige Feder angeordnet ist. Die DE 10 2011 054 072 A1 offenbart eine Linsenhalterung für Flüssiglinsen.

Die US 2019/0265433 offenbart ein System mit einer adaptiven Linse.

Es ist daher Aufgabe der Erfindung, den Einbau einer adaptiven Linse zu verbessern.

Diese Aufgabe wird durch eine optische Anordnung nach Anspruch 1 gelöst.

Eine adaptive Linse des Linsenmoduls, deren Brennweite beispielsweise durch Anlegen von Steuersignalen oder -spannungen an mindestens eine Elektrode der adaptiven Linse veränderbar ist, wird in einem Modulgehäuse untergebracht, das einen Boden und eine Seitenwand aufweist. Ein Andruckelement hält die adaptive Linse in dem Modulgehäuse, indem es von oben her eine Kraft auf die adaptive Linse ausübt, mit der die adaptive Linse gegen den Boden gedrückt wird. Richtungsbegriffe wie Boden, also eine Unterseite, oder von oben her beziehen sich auf eine bestimmte Betrachtung und sind relativ zu verstehen, da das Linsenmodul als Ganzes natürlich beliebig verdreht werden kann

Als Andruckelement wird eine Wellfeder verwendet. Derartige Wellfedem werden beispielsweise in Kugellagern verwendet. Daher kann eine Präzisionswellfeder eines Kugellagerherstellers eingesetzt werden. Die Wellfeder sorgt für eine wohldefinierte Andruckkraft, die sich durch Toleranzen, Temperatureffekte oder Alterungserscheinungen verändert.

Die genannten Bauteile, also adaptive Linse, Modulgehäuse mit Boden und Seitenwand und Wellfeder, sind vorzugsweise zylindrisch beziehungsweise ringförmig geformt und damit zumindest näherungsweise Rotationskörper bezüglich der optischen Achse. Das gilt nur näherungsweise, weil Anschlüsse, Aussparungen oder im Falle der Wellfeder die definierende axiale Wellenform von einem exakten Rotation Körper abweichen. Diese bevorzugte Formgebung betrifft auch die meisten der im Anschluss vorgestellten Elemente für optionale Ausgestaltungen der Erfindung.

Mit einer zweiten Feder wird das Linsen modul auf das Objektiv oder dessen Anschlussstück (Barrel, Tubus) gedrückt. Durch den modularen Aufbau kann das Linsenmodul für verschiedene Objektiwarianten verwendet werden. Die Montage ist sehr einfach und vorzugsweise werkzeuglos, und es ergibt sich eine kompakte Bauform.

Die Erfindung hat den Vorteil, dass dank des Linsenmoduls eine modulare Integration der adaptiven Linse für verschiedene Standardobjektive ermöglicht wird. Die Montagekomplexität ist erheblich reduziert. Es wird für eine sichere Anbindung und Kontaktierung über den gesamten industriellen Temperaturbereich ohne Überschreitung oder Unterschreitung der geforderten Anpresskraft gesorgt. Die verschiedenen Elemente, wie Modulgehäuse und Wellfeder, können als Metallteile gestaltet werden, so dass temperaturempfindlicher Kunststoff vermieden ist. Es lassen sich kleine Baugrößen erreichen. Die angefederte adaptive Linse erlaubt den Einsatz des Linsenmoduls und eines daraus aufgebauten Objektivs oder Sensors auch in rauer industrieller Umgebung mit Schock und Vibration.

Die adaptive Linse ist bevorzugt eine Flüssig- oder Gellinse und weist insbesondere zwei nicht mischbare Medien auf, deren gegenseitige Grenzfläche durch Anlegen einer Spannung eine der Spannung entsprechende Krümmung aufweist. Solche Linsen bieten die gewünschten Einstellmöglichkeiten der Fokuslage und sind dabei sehr bauklein und kostengünstig.

Die adaptive Linse weist bevorzugt mindestens eine Elektrode und das Linsenmodul eine Anschlussleitung auf, insbesondere eine Flexleitung, um die Elektrode von außerhalb des Modulgehäuses zu kontaktieren. Über die mindestens eine Elektrode wird die adaptive Linse angesteuert, um ihre Brennweite anzupassen. Die Anschlussleitung schafft eine Verbindung nach außerhalb des Modulgehäuses. Die Anschlussleitung ist vorzugsweise als Flexleitung ausgestattet.

Das Linsenmodul weist bevorzugt einen Temperaturfühler auf, der insbesondere als Widerstand auf der Anschlussleitung ausgebildet ist. Kenntnis der Temperatur ist beispielsweise für eine Temperaturkompensation der Steuersignale zum Einstellen einer Brennweite nützlich. Die Ausgestaltung als Widerstand auf der Anschlussleitung ist besonders kompakt und einfach.

Das Linsenmoduf weist bevorzugt ein Isolationselement zwischen adaptiver Linse und Wellfeder auf, das insbesondere zugleich als Montageelement zum Einsetzen der adaptiven Linse in das Modulgehäuse ausgebildet ist. Bei den herkömmlichen Lösungen mit einem O-Ring ist keine Isolierung erforderlich. Eine metallische und folglich leitende Wellfeder jedoch könnte einen Kurzschluss zwischen den Elektroden der adaptiven Linse beziehungsweise der Anschlussleitung verursachen. Das Isolationselement kann eine zusätzliche Funktion bekommen, in dem es bei der Montage für die richtige Lage der adaptiven Linse sorgt.

Das Linsenmodul weist bevorzugt ein Presselement zum Andrücken der Wellfeder auf die adaptive Linse auf. Das beispielsweise als Pressering ausgestaltete Presselement drückt auf die Wellfeder, damit diese gespannt ist und die gewünschte Federkraft auf die adaptive Linse ausübt. Das Presselement seinerseits wird beispielsweise im verbauten Zustand des Linsenmoduls mit einem Objektiv angedrückt und gibt diese Kraft auf die Wellfeder weiter.

Presselement, Wellfeder, Isolationselement, adaptive Linse und Boden sind vorzugsweise in dieser Reihenfolge übereinander angeordnet. Wie schon erwähnt, sind Richtungsbegriffe wie übereinander relativ unter der Vorstellung zu verstehen, dass das Modulgehäuse mit seinem Boden nach unten ausgerichtet ist. Sofern in einigen Ausführungsformen eines der genannten Elemente fehlt, behalten die verbleibenden Elemente vorzugsweise die genannte gleiche Reihenfolge.

Die zweite Feder ist bevorzugt als Multiturnfeder ausgebildet. Damit kann die zweite Feder bei verschiedenen Abständen zwischen Linsenmodul und einem Gegenhalt der zweiten Feder vermitteln, beispielsweise einer Frontscheibe. Somit kann dasselbe Linsenmodul unter Verwendung derselben zweiten Feder zumindest in gewissem Rahmen für Objektive unterschiedlicher Größe verwendet werden, es werden andere Objektivbrennweiten mit anderen Abständen ermöglicht. Wird der Abstand zu groß, so kann der Einsatz einer anderen zweiten Feder erforderlich werden.

Zwischen dem Linsenmodul und dem Objektiv beziehungsweise dessen Anschlussstück oder Barrel ist vorzugsweise eine Spielpassung für eine Rotation einer Anschlussleitung des Linsenmoduls in die richtige Position vorgesehen. Die seitliche Ausrichtung der Anschlussleitung lässt sich mit der Spielpassung sehr einfach einstellen und korrigieren.

Das Objektiv weist bevorzugt ein Fremdlichtfilter auf, das oberhalb der zweiten Feder angeordnet ist. Oberhalb ist wieder relativ bei Orientierung des Linsenmoduls mit dem Boden nach unten und Aufsitzen des Bodens auf dem Objektiv oder dessen Anschlussstück zu verstehen. Das Fremdlichtfilter befindet sich demnach auf einer dem Linsenmodul und Objektiv gegenüberliegenden Seite der zweiten Feder, und die Reihenfolge ist von unten her Objektiv, Linsenmodul, zweite Feder, Fremdlichtfilter.

In bevorzugter Weiterbildung weist ein optoelektronischer Sensor mit einem Lichtsender und/oder einem Lichtempfänger ein dem Lichtsender und/oder dem Lichtempfänger vorgeordnetes erfindungsgemäßes Objektiv auf. Das Linsenmodul ermöglicht eine genaue Positionierung der adaptiven Linse auf der optischen Achse. Der optoelektronischer Sensor ist beispielsweise einer Kamera mit Bildsensor als Lichtempfänger und vorgeordnetem erfindungsgemäßen Objektiv oder ein Barcodescanner, dessen Lesestrahl durch ein erfindungsgemäßes objektiv geformt wird.

Das Objektiv ist bevorzugt mit der zweiten Feder gegen eine Frontscheibe des Sensors gedrückt. Somit ergibt sich die Reihenfolge Objektiv, (Anschlussstück oder Barrel), Linsenmodul, zweite Feder, Frontscheibe, wobei ein optionales Fremdlichtfilter vor der Frontscheibe angeordnet ist. Indem die Frontscheibe auf die zweite Feder drückt, wird die erforderliche Federkraft erzeugt, die über das Presselement und die Wellfeder letztlich die adaptive Linse mit wohldefinierter und dauerhaft im gewünschten Bereich liegender Kraft an dem Boden des Modulgehäuses hält.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines optoelektronischen Sensors mit einer adaptiven Linse in der Empfangsoptik;
- Fig. 2: eine schematische Schnittdarstellung eines optoelektronischen Sensors mit einer adaptiven Linse in der Sendeoptik;
- Fig. 3: eine schematische Darstellung einer adaptiven Linse;
- Fig. 4: eine Schnittdarstellung eines Linsenmoduls;
- Fig. 5: eine aufgeschnittene dreidimensionale Darstellung des Linsenmoduls gemäß Figur 4;
- Fig. 6: eine dreidimensionale Darstellung des Linsenmoduls gemäß Figur 4 und 5; und
- Fig. 7: eine dreidimensionale Darstellung des gemeinsam mit einem objektiv montierten Linsenmoduls gemäß den Figuren 4 bis 6.

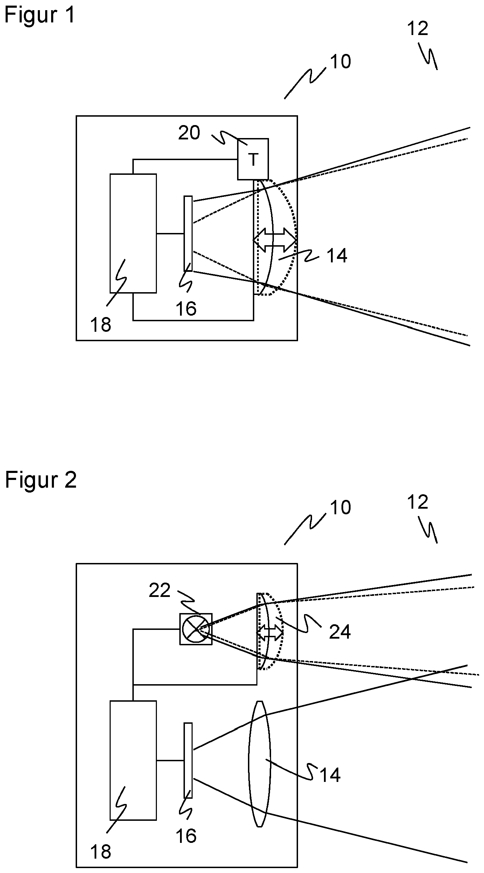

Figur 1 zeigt eine schematische Schnittdarstellung eines optoelektronischen Sensors 10 zur Erfassung von Objektinformationen aus einem Überwachungsbereich 12. Über eine Empfangsoptik 14 erzeugt ein Bildsensor 16, beispielsweise ein CCD- oder CMOS-Chip, Aufnahmen des Überwachungsbereichs 12. Die Bilddaten dieser Aufnahmen werden an eine Steuer- und Auswertungseinheit 18 weitergegeben.

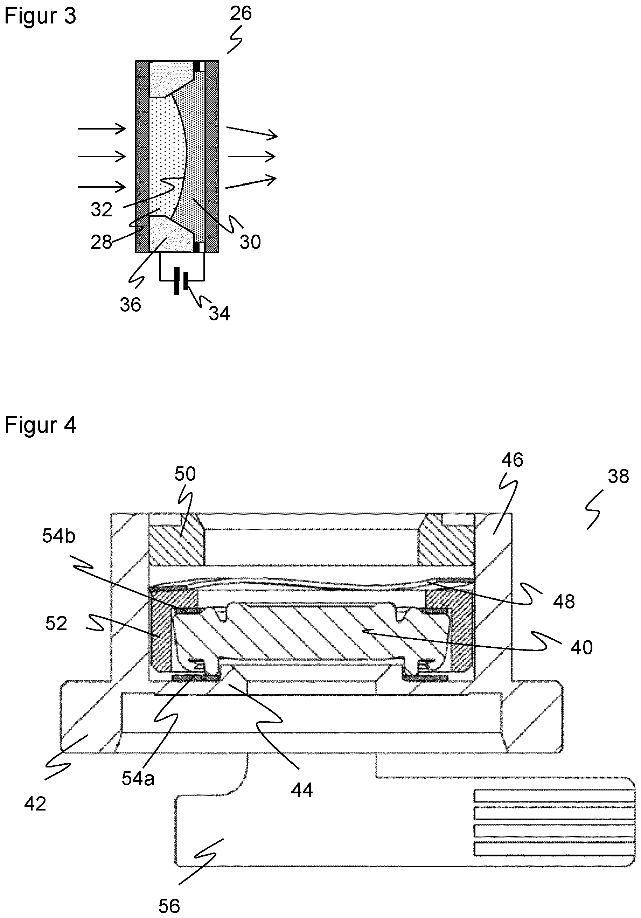

Die Empfangsoptik 14 weist eine adaptive Linse auf, deren Brennweite durch elektronische Ansteuerung der Steuer- und Auswertungseinheit 18 verändert werden kann. Figur 1 zeigt mit gestrichelten Linien beispielhaft eine alternative Brennweiteneinstellung, und das Funktionsprinzip einer denkbaren Bauform der adaptiven Linse wird später unter Bezugnahme auf die Figur 3 näher erläutert. Ein Temperaturfühler 20 ist mit der Steuer- und Auswertungseinheit verbunden und so angeordnet, dass er mindestens mittelbar in thermischer Verbindung zu der adaptiven Linse steht.

Figur 2 zeigt eine weitere Ausführungsform des optoelektronischen Sensors 10. Diese Ausführungsform unterscheidet sich von der in Figur 1 gezeigten Ausführungsform durch einen Lichtsender 22 mit einer Sendeoptik 24. Die adaptive Linse ist nun Teil der Sendeoptik 24, die Empfangsoptik 14 hat eine feste Fokuslage. Ein Temperaturfühler 20 wie in Figur 1 ist auch in der Ausführungsform der Figur 2 für die adaptive Linse der Sendeoptik 24 möglich. Weiterhin sind Mischformen der Ausführungsformen nach Figur 1 und Figur 2 denkbar, in denen Empfangsoptik 14 und Sendeoptik 24 eine adaptive Linse aufweisen oder eine gemeinsame Optik mit adaptiver Linse für den Bildsensor 16 und den Lichtsender 22 vorgesehen ist, wobei die adaptive Linse wiederum einen Temperaturfühler 20 aufweisen kann. Außerdem kann in Figur 1 auch ein Lichtsender 22 mit einer Sendeoptik ohne adaptive Linse hinzugefügt werden, beispielsweise um den Überwachungsbereich 12 auszuleuchten oder um ein Lichtsignal zu erzeugen, dessen Lichtlaufzeit zur Abstandsmessung bestimmt wird.

Die Figuren 1 und 2 sind also Prinzipdarstellungen, die stellvertretend für eine Vielzahl von Sensoren stehen. Der Sensor 10 gemäß Figur 1 ist beispielsweise eine Kamera mit variablem Fokus, die sich unter anderem in vielfältigen Anwendungen für die Inspektion und Vermessung von Objekten eignet, vorzugsweise in stationärer Montage an einer Förderanlage, welche die Objekte durch den Überwachungsbereich 12 bewegt. Durch den Einsatz an sich bekannter Signal- oder Bildverarbeitungen zum Lesen von Codes entsteht ein Barcodescanner oder ein kamerabasierter Codeleser. Der Bildsensor 16 kann eine Zeilen- oder eine Matrixanordnung von Pixeln aufweisen. In weiteren Ausführungsformen ist anstelle des Bildsensors 16 ein anderer Lichtempfänger verwendet, beispielsweise eine Photodiode oder eine APD (avalanche photodiode). Letzteres wird beispielsweise in einem insbesondere entfernungsmessenden Lichttaster oder einem Laserscanner verwendet.

Auch der Lichtsender 22 kann vielfältige Funktionen erfüllen. Beispielsweise wird mit Hilfe der Sendeoptik 24 ein bestimmter beleuchteter Überwachungsbereich 12 eingestellt, ein scharfes Kontrastmuster, ein scharfes Zielmuster zum Kenntlichmachen eines Aufnahme- oder Lesebereichs oder ein scharfer Lichtfleck in einem bestimmten Abstand projiziert. Damit sind so unterschiedliche Sensoren 10 wie ein kamerabasierter Codeleser, ein Codescanner oder eine 3D-Kamera denkbar.

Figur 3 zeigt die adaptive Linse der Empfangsoptik 14 beziehungsweise der Sendeoptik 24 in einer beispielhaften Ausführungsform als Flüssiglinse 26 nach dem Elektrobenetzungseffekt. Dabei geht es nur um das Funktionsprinzip, die konkrete Ausgestaltung und Bauform kann abweichen. Die Funktionsweise wird anhand dieser Flüssiglinse 26 erläutert, aber die Erfindung umfasst auch andere adaptive Linsen, beispielsweise solche mit einer Flüssigkeitskammer und einer diese bedeckenden Membran, deren Wölbung durch Druck auf die Flüssigkeit verändert wird, oder Linsen mit einem gelartigen optisch durchlässigen Material, dass durch eine Aktorik mechanisch verformt wird.

Die aktiv durchstimmbare Flüssiglinse 26 weist zwei transparente, nicht mischbare Flüssigkeiten 28, 30 mit unterschiedlichen Brechungsindices und gleicher Dichte auf. Die Form der Flüssigkeitsgrenzschicht 32 zwischen den beiden Flüssigkeiten 28, 30 wird zur optischen Funktion verwendet. Die Aktuierung basiert auf dem Prinzip der Elektrobenetzung, welche eine Abhängigkeit der Oberflächen- oder Grenzflächenspannung vom angelegten elektrischen Feld zeigt. Deshalb ist es möglich, die Form der Grenzschicht 32 und damit die optischen Eigenschaften der Flüssiglinse 26 durch elektrische Ansteuerung an einem Anschluss 34 zu verändern, wodurch entsprechende Spannungen an einer Elektrode 36 anliegen. Neben einer Verstellung der Brennweite ist auch eine Verkippung vorstellbar, wofür dann mindestens eine weitere Elektrode an der Flüssiglinse 26 vorgesehen ist.

Die Figuren 4 bis 6 zeigen ein Linsenmodul 38 mit einer adaptiven Linse 40 in einer Schnittdarstellung, einer aufgeschnittenen dreidimensionalen Darstellung und einer dreidimensionalen Darstellung von außen. Die adaptive Linse 40 kann eine Flüssiglinse sein, wie zu Figur 3 beschrieben, oder ein anderes Prinzip zur Verstellung der Brennweite verwenden. Die adaptive Linse 40 ist in einem Modulgehäuse 42 mit einem Boden 44 und einer Seitenwand 46 untergebracht. Eine Wellfeder 48 drückt die adaptive Linse 40 nach unten gegen den Boden 44. Die Wellfeder 48 ihrerseits wird von oben her durch einen Pressering 50 angedrückt. Zwischen Wellfeder 48 und adaptiver Linse 40 ist ein Isolationselement 52 angeordnet.

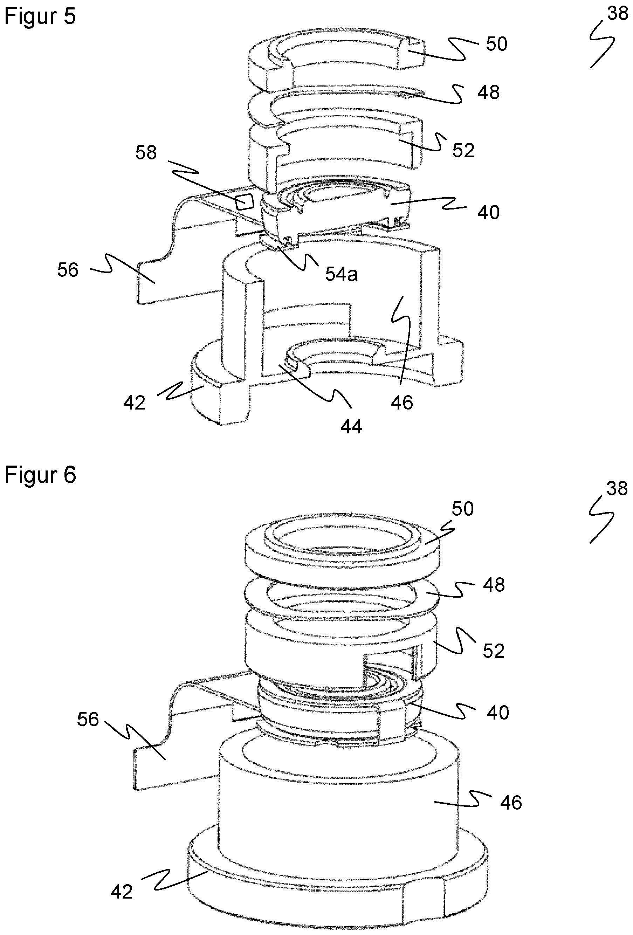

Wie insbesondere in den dreidimensionalen Darstellungen der Figuren 5 und 6 zu erkennen, sind die genannten Bauteile zylindrisch oder als Ring gestaltet und jedenfalls näherungsweise als Rotationskörper um die optische Achse geformt.

Elektroden 54a-b der adaptiven Linse 40 werden von einer als Flexleitung ausgestalteten Anschlussleitung 56 kontaktiert, so dass die Elektroden 54a-b seitlich von außerhalb des Linsenmoduls 38 angesteuert werden können. In Figur 5 ist noch ein optionaler Widerstand 58 auf der Anschlussleitung 56 gezeigt, der als Temperaturfühler dient.

Erfindungsgemäß ist somit die adaptive Linse 40 durch die Wellfeder 48 angefedert, d.h. wird mit definierter Kraft gegen den Boden 44 gedrückt. Sie ersetzt damit den herkömmlichen toleranzkritischen O-Ring und vermeidet die damit verbundenen Nachteile. Die Wellfeder 48 ist vorzugsweise aus Metall und beispielsweise eine Präzisionswellfeder eines Kugellagerherstellers. Der Vorteil besteht darin, dass die Kennlinie der Wellfeder 48 nahezu linear verläuft und über den gesamten industriellen Temperaturbereich praktisch keine Schwankungen der ausgeübten Kraft auftreten. Für eine metallische und damit im Gegensatz zu einem herkömmlichen O-Ring elektrisch leitende Wellfeder 48 wird eine elektrische Isolierung zwischen den Elektroden 54a-b der adaptiven Linse 40 benötigt. Diese Funktion erfüllt das Isolationselement 52, das als Ring geformt und zugleich als Montagehilfe verwendet werden kann. Der Pressring 50 wird in seiner Dicke vorzugsweise so ausgelegt, dass bei Montage des Linsenmoduls dessen Stirnfläche auf Block zum Modulgehäuse 42 gepresst wird und sich somit die richtige Kraft der Wellfeder 48 auf die adaptive Linse im typischen Bereich < 10 N automatisch einstellt.

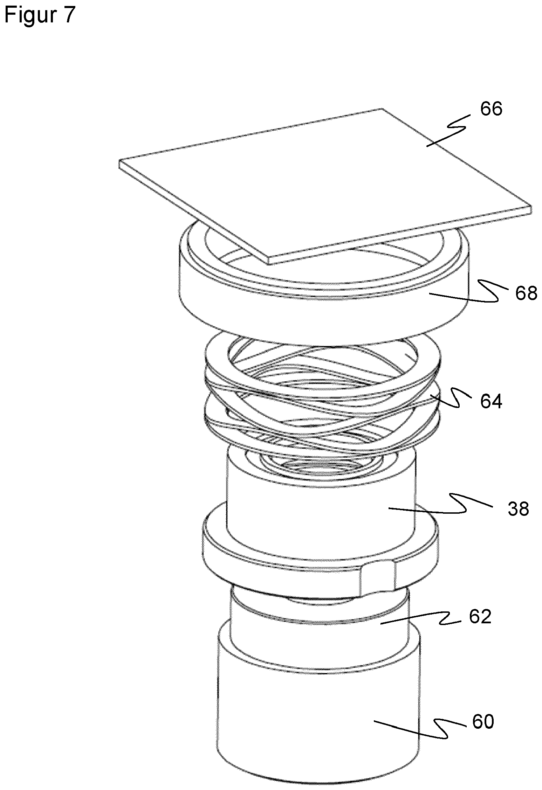

Figur 7 zeigt in einer dreidimensionalen Darstellung ein zu einem Objektiv montiertes Linsenmodul 38. Das Linsenmodul 38 wird auf einem Objektiv 60 beziehungsweise dessen Anschlussstück 62 (Barrel) angeordnet. Die Bezeichnung Objektiv 60 ist ein wenig unscharf, da man auch die Kombination des Objektivs 60 und des Linsenmoduls 38 als ein Objektiv auffassen kann. Das wird hier nicht weiter unterschieden, das Objektiv 60 weist jedenfalls eine oder mehrere Linsen auf, die mit der adaptiven Linse 40 des Linsenmoduls 38 nach Art eines Objektivs zusammenwirken.

Zur Modulintegration wird das Linsenmodul 38 auf das Anschlussstück 62 gesetzt und über eine Multiturnfeder 64 angedrückt und so in Position gehalten. Auf der Gegenseite wird die Multiturnfeder 64 an eine Frontscheibe 66 beispielsweise eines optoelektronischen Sensors 10 oder alternativ zu der Frontscheibe 66 ein anderes Element gepresst und dadurch gespannt. Dazwischen kann noch ein optionaler Fremdlichtschutz oder ein Fremdlichtfilter 68 angeordnet sein.

Die Multiturnfeder 64 kann so ausgelegt werden, dass sie für verschiedene Objektivabstände beziehungsweise Objektive 60 passt und jeweils eine Federkraft auf die adaptive Linse 40 im gewünschten Bereich erzeugt wird. Über eine Spielpassung zwischen Objektiv 60 beziehungsweise Anschlussstück 62 und Modulgehäuse 42 des Linsenmoduls 38 erfolgt eine exakte Ausrichtung der adaptiven Linse 40 an der optischen Achse des Objektivs 60. Die Montage des Linsenmoduls 38 auf das Objektiv 60 kann werkzeuglos erfolgen. Die Elektroden 54a-b der adaptiven Linse 40 werden von der Anschlussleitung 56 kontaktiert. Das Linsenmodul 38 wird aufgesteckt und dann wird erst die Multiturnfeder 64 und anschließend der Deckel des Sensors 10 mit Frontscheibe 66 und Fremdlichtfilter 68 aufgesetzt. Die Anschlussleitung 56 wird bei der Montage durch die Spielpassung in die richtige Position gedreht.

## Patentansprüche

1. Optische Anordnung, enthaltend ein Objektiv (60) mit mindestens einer Linse und ein Linsenmodul (38), wobei das Linsenmodul (38) ein Modulgehäuse (42) mit einem Boden (44) und einer Seitenwand (46), eine in ihrer Brennweite veränderliche adaptive Linse (40) in dem Modulgehäuse (42) sowie ein Andruckelement (48) mit einer Wellfeder aufweist, um die adaptive Linse (40) in dem Modulgehäuse (42) zu halten, und wobei die optische Anordnung eine zweite Feder (64) aufweist, die das Linsenmodul (38) auf das Objektiv drückt.

2. Optische Anordnung nach Anspruch 1,
wobei die adaptive Linse (40) eine Gel- oder Flüssiglinse ist.

3. Optische Anordnung nach Anspruch 1 oder 2,
wobei die adaptive Linse (40) mindestens eine Elektrode (54a-b) und das Linsenmodul (38) eine Anschlussleitung (56) aufweist, insbesondere eine Flexleitung, um die Elektrode (54a-b) von außerhalb des Modulgehäuses (42) zu kontaktieren.

4. Optische Anordnung nach einem der vorhergehenden Ansprüche,
wobei das Linsenmodul (38) einen Temperaturfühler (20, 58) aufweist, der insbesondere als Widerstand (58) auf der Anschlussleitung (56) ausgebildet ist.

5. Optische Anordnung nach einem der vorhergehenden Ansprüche,
wobei das Linsenmodul (38) ein Isolationselement (52) zwischen adaptiver Linse (40) und Wellfeder (48) aufweist, das insbesondere zugleich als Montageelement zum Einsetzen der adaptiven Linse (40) in das Modulgehäuse (42) ausgebildet ist.

6. Optische Anordnung nach einem der vorhergehenden Ansprüche,
wobei das Linsenmodul (38) ein Presselement (50) zum Andrücken der Wellfeder (48) auf die adaptive Linse (40) aufweist.

7. Optische Anordnung nach einem der Ansprüche 1 bis 4 und Anspruch 5 und 6,
wobei in dieser Reihenfolge Presselement (50), Wellfeder (48), Isolationselement (52), adaptive Linse (40) und Boden (44) übereinander angeordnet sind.

8. Optische Anordnung nach einem der vorhergehenden Ansprüche,
wobei die zweite Feder (64) als Multiturnfeder ausgebildet ist.

9. Optische Anordnung nach einem der vorhergehenden Ansprüche,
wobei zwischen dem Linsenmodul (38) und dem Objektiv (60, 62) eine Spielpassung für eine Rotation einer Anschlussleitung (56) des Linsenmoduls (38) in die richtige Position vorgesehen ist.

10. Optische Anordnung nach einem der vorhergehenden Ansprüche,
die ein Fremdlichtfilter (68) aufweist, das zwischen der zweiten Feder (64) und einer Frontscheibe (66) angeordnet ist.

11. Optoelektronischer Sensor (10) mit einem Lichtsender (22) und/oder einem Lichtempfänger (16) und einer dem Lichtsender (22) und/oder dem Lichtempfänger (16) vorgeordneten optischen Anordnung nach einem der vorhergehenden Ansprüche.

12. Optoelektronischer Sensor (10) nach Anspruch 11,
wobei das Objektiv mit der zweiten Feder (64) gegen eine Frontscheibe (66) des Sensors (10) gedrückt ist.

## Claims

1. An optical arrangement comprising an objective (60) having at least one lens and a lens module (38), the lens module (38) comprising a module housing (42) having a base (44) and a side wall (46), a variable focal length adaptive lens (40) in the module housing (42), and a pressure member (48) having a wave spring to retain the adaptive lens (40) in the module housing (42), and wherein the optical arrangement includes a second spring (64) that presses the lens module (38) onto the objective.

2. The optical arrangement according to claim 1,
wherein the adaptive lens (40) is a gel or liquid lens.

3. The optical arrangement according to claim 1 or 2,
wherein the adaptive lens (40) comprises at least one electrode (54a- b) and the lens module (38) comprises a connection line (56), in particular a flex line, for contacting the electrode (54a-b) from outside the module housing (42).

4. The optical arrangement according to any of the preceding claims,
wherein the lens module (38) comprises a temperature sensor (20, 58) which in particular is formed as a resistor (58) on the connection line (56).

5. The optical arrangement according to any of the preceding claims,
wherein the lens module (38) comprises an insulating element (52) between the adaptive lens (40) and the wave spring (48), which in particular is also formed as a mounting element for inserting the adaptive lens (40) into the module housing (42).

6. The optical arrangement according to any of the preceding claims,
wherein the lens module (38) comprises a pressing element (50) for pressing the wave spring (48) onto the adaptive lens (40).

7. The optical arrangement according to any of claims 1 to 4 and claims 5 and 6, wherein, in this order, the pressing element (50), the wave spring (48), the insulating element (52), the adaptive lens (40) and the base (44) are arranged one above the other.

8. The optical arrangement according to any of the preceding claims,
wherein the second spring (64) is formed as a multiturn spring.

9. The optical arrangement according to any of the preceding claims,
wherein a clearance fit is provided between the lens module (38) and the objective (60, 62) for rotation of a connection line (56) of the lens module (38) into the correct position.

10. The optical arrangement according to any of the preceding claims,
comprising an extraneous light filter (68) disposed between the second spring (64) and a front screen (66).

11. An optoelectronic sensor (10) comprising a light transmitter (22) and/or a light receiver (16) and an optical arrangement according to any of the preceding claims arranged in front of the light transmitter (22) and/or the light receiver (16).

12. The optoelectronic sensor (10) according to claim 11,
wherein the objective is pressed against a front screen (66) of the sensor (10) by the second spring (64).

## Revendications

1. Ensemble optique, comprenant un objectif (60) pourvu d'au moins une lentille et un module de lentille (38),
dans lequel
le module de lentille (38) comprend un boîtier de module (42) pourvu d'un fond (44) et d'une paroi latérale (46), une lentille adaptative (40), dont la distance focale est variable, dans le boîtier de module (42) ainsi qu'un élément de pression (48) pourvu d'un ressort ondulé pour maintenir la lentille adaptative (40) dans le boîtier de module (42), et l'ensemble optique comprend un deuxième ressort (64) qui presse le module de lentille (38) sur l'objectif.

2. Ensemble optique selon la revendication 1,
dans lequel la lentille adaptative (40) est une lentille à gel ou à liquide.

3. Ensemble optique selon la revendication 1 ou 2,
dans lequel la lentille adaptative (40) comprend au moins une électrode (54a-b), et le module de lentille (38) comprend une ligne de connexion (56), en particulier une ligne flexible, pour contacter l'électrode (54a-b) depuis l'extérieur du boîtier de module (42).

4. Ensemble optique selon l'une des revendications précédentes,
dans lequel le module de lentille (38) comprend un capteur de température (20, 58) qui est réalisé en particulier sous forme de résistance (58) sur la ligne de connexion (56).

5. Ensemble optique selon l'une des revendications précédentes,
dans lequel le module de lentille (38) comprend un élément isolant (52) entre la lentille adaptative (40) et le ressort ondulé (48), qui est en particulier réalisé en même temps comme élément de montage pour l'insertion de la lentille adaptative (40) dans le boîtier de module (42).

6. Ensemble optique selon l'une des revendications précédentes,
dans lequel le module de lentille (38) comprend un élément presseur (50) pour presser le ressort ondulé (48) sur la lentille adaptative (40).

7. Ensemble optique selon l'une des revendications 1 à 4 et selon les revendications 5 et 6,
dans lequel l'élément presseur (50), le ressort ondulé (48), l'élément isolant (52), la lentille adaptative (40) et le fond (44) sont superposés dans cet ordre.

8. Ensemble optique selon l'une des revendications précédentes,
dans lequel le deuxième ressort (64) est réalisé sous forme de ressort multi-tour.

9. Ensemble optique selon l'une des revendications précédentes,
dans lequel un ajustement avec jeu est prévu entre le module de lentille (38) et l'objectif (60, 62) pour une rotation d'une ligne de connexion (56) du module de lentille (38) vers la position correcte.

10. Ensemble optique selon l'une des revendications précédentes,
comprenant un filtre de lumière parasite (68) disposé entre le deuxième ressort (64) et une vitre frontale (66).

11. Capteur optoélectronique (10) comprenant un émetteur de lumière (22) et/ou un récepteur de lumière (16) et un ensemble optique selon l'une des revendications précédentes disposé en amont de l'émetteur de lumière (22) et/ou du récepteur de lumière (16).

12. Capteur optoélectronique (10) selon la revendication 11,
dans lequel l'objectif est pressé contre une vitre frontale (66) du capteur (10) au moyen du deuxième ressort (64).
